# EUROPÄISCHE PATENTSCHRIFT

(11) **EP 1 429 218 B1**
(45) Veröffentlichungstag und Bekanntmachung des Hinweises auf die Patenterteilung: **20.09.2006**
(21) Anmeldenummer: 03027999.6
(22) Anmeldetag: 05.12.2003
(51) Int. Cl.: G05B 19/418, G05B 19/05

(54) **Verfahren zur Signalausgabe durch ein AS-interface Transmitter.**
Method for signal output by an AS-interface transmitter.
Procédé pour la génération de signaux à la sortie d'un émetteur AS-interface

(30) Priorität: 09.12.2002 DE 10257632
(43) Veröffentlichungstag der Anmeldung: 16.06.2004
(73) Patentinhaber: Zentrum Mikroelektronik Dresden AG, 01109 Dresden (DE)
(72) Erfinder: Reichel, Thomas, 01309 Dresden (DE)
(74) Vertreter: Lippert, Stachow & Partner

(56) Entgegenhaltungen:
- DE-A- 10 038 860
- W KRIESEL O MADELUNG: "AS-Interface Das Aktuator-Sensor-Interface für die Automation" , CARL HANSER VERLAG , MÜNCHEN WIEN XP002273144 * Seite 55 - Seite 67 *
- ANONYMOUS: "Datenblatt ASI Slave IC AS2701" 30. Oktober 2003 (2003-10-30) , AUSTRIAMYCROSYSTEMS , AUSTRIA XP002273143 * Seite 1 - Seite 3 *
- FLASCHKA E: "BINARE SENSOREN AM BUS MIT ASI EINE DURCHGANGIGE DATENUBERTRAGUNG BIS ZUM EINFACHEN SENSOR" ELEKTRONIK, FRANZIS VERLAG GMBH. MUNCHEN, DE, Bd. 43, Nr. 12, 14. Juni 1994 (1994-06-14), Seiten 64-68, XP000464137 ISSN: 0013-5658

## Beschreibung

Die Erfindung betrifft ein Verfahren zur Signalausgabe von AS-i-Transmittern, die in AS-i-Einheiten (Actuator-Sensor-Interface-Einheiten) eines AS-i Bussystems enthalten sind, wobei zum AS-i Bussystem zumindest ein AS-i-Master-Modul und ein AS-i-Slave-Modul gehören.

Aufbau, Funktionsweise und Verwendung eines AS-Interface-Slave-ICs sind in dem Buch "AS-Interface, Das Aktuator-Sensor-Interface für die Automation"; W.Kriesel & O.Madelung, Carl Hanser Verlag, München, 1999" beschrieben.

Mit dem herstellerunabhängigen Standard-Vernetzungssystem AS-i steht den Anwendern innerhalb der Automatisierungstechnik eine zeitsparende und wirtschaftliche Alternative zur traditionellen Verkabelung- Anschlusstechnik (SPS) z.B. mittels Kabelbäumen zur Verfügung.

Das AS-i Bussystem bietet eine preiswerte und schnelle Schnittstelle zur Ankopplung von AS-i Modulen mit ihren binären Aktuatoren und Sensoren an Steuer- und Regelsysteme. Die Schnittstelle steht nicht in Konkurrenz zu höheren Feldbussystemen, sondern sie steht als Bussystem der untersten Automatisierungsebene in deren ergänzenden Kooperation.

Beim Stand der Technik sind als wesentliche Bestandteile von AS-i-Bussystemen mindestens ein Master-Modul, Slave-Module, Kabel und das Netzteil des AS-i-Bussystems zu nennen.

Der Master übernimmt alle Aufgaben, die für die Abwicklung des Busbetriebes notwendig sind.

Er kann als Einschubkarte zum Beispiel auch für einen Übergang zu einem anderen Bussystem realisiert werden.

Der Master überwacht und steuert den Bus und entscheidet über den zeitlichen Zugriff auf die angeschlossenen Sensoren/Aktuatoren. Dazu ruft er die Teilnehmer im Bussystem mit ihrer Adresse auf und erwartet eine Antwort.

Die an die AS-i-Leitung angeschlossenen Sensoren und Aktuatoren müssen die Aufrufe des As-i Masters verstehen und Daten an diesen übertragen können.

Diese Aufgabe übernehmen AS-i-Slaves. Sie sind passive Teilnehmer und antworten nur, wenn sie vom Master angesprochen werden. Jeder Slave verfügt dazu über eine eigene Adresse.

Diese ist beim Auslieferungszustand auf Null gesetzt und es muss vor dem Betrieb eines AS-i-Systems jedem Slave eine gültige Adresse zugewiesen werden.

Diese Zuweisung einer für die Kommunikation im AS-i-Bussystem notwendigen gültigen Adresse für jedes Slave-Modul erfolgt durch die Adress-Programmierung an den jeweiligen Teilnehmern mittels eines Programmiergerätes beim Aufbau eines AS-i-Bussystems.

Die zur Kopplung vorgesehenen Aktuatoren können z.B. Ventile bzw. Ventilinsel, aber auch Relais sein.

Die o.g. binären Sensoren sind z.B. Endschalter, Näherungsschalter oder Lichtschranken.

Beim AS-i-Bussystem werden die Datenübertragung und die Energieversorgung der Teilnehmer über die gleichen Leitungen (eine AS-iP- und eine AS-iN-Busleitung) realisiert. Erst im Slave-Baustein werden Daten und Energieversorgung wieder getrennt.

Diese Trennung wird durch ein festgelegtes Kodierungs- und Übertragungsverfahren im AS-i-Bussystem gewährleistet.

Zunächst werden die zu übermittelnden Daten nach einem bestimmten Kodierungsverfahren (Manchester-Kodierung) in den AS-i Modulen kodiert. Anschließend werden diese Daten auf die Bus-Gleichspannung z. B. mit speziellen Modulationsgliedern aufmoduliert.

Als Modulationsglieder dienen LR-Parallelschaltungen, die bzgl. der jeweiligen AS-iP- bzw. AS-iN-Busleitung und der Bus-Gleichspannungsquelle in Reihe geschaltet werden.

Mittels der Einprägung eines Stromes durch einen jeweilig im AS-i Modul enthaltenen Sender (Transmitter) entsteht auf dem Bus ein sin²-förmiges Spannungssignal mit alternierender Impulsfolge.

Durch den ebenfalls jeweilig im AS-i Modul enthaltenen Empfänger (AS-i Receiver) wird mit Hilfe z.B. zweier Komparatoren das manchester-kodierte Signal zurückgewonnen. Dieses Signal kann nun wiederum in der im AS-i Modul enthaltenen Digital-Steuerung mittels einer Aktuator-Steuerung zum ursprünglichen Datum dekodiert werden.

Durch eine festgelegte Telegrammstruktur wechselt sich bei der auf diese Weise vorgenommenen Datenübertragung ein Masteraufruf und Masterantwort des aufzurufen Teilnehmers innerhalb eines Zyklus ab.

Diese Slave-AS-i Einheiten werden der Reihe nach abgefragt. Verfahren zur Steuerung und Überprüfungen der Senderberechtigungen können somit entfallen.

Die Energieversorgung wird von einem speziellen AS-i Netzteil, welches beim Stand der Technik auch die Modulationsglieder enthält, übernommen.

Zur Verdrahtung werden beim AS-i-Bussystem ungeschirmte Zweidrahtleitungen verwendet und es können Rundkabel aber auch Flachkabel verwendet werden.

Preiswert und schnell aufzubauen ist ein AS-i Bussystem deshalb, weil die aufwendige Parallelverdrahtung zwischen Steuerung und Aktuatoren/Sensoren entfällt.

So ermöglicht in bestimmten Realisierungen eine einfache 2-Drahtleitung den Anschluss von mehr als 31 Slave-Modulen in denen 124 und mehr Sensoren und/oder Aktuatoren enthalten sein können.

Dieses Beispiel gibt einen Einblick auf das Potential der Wirtschaftlichkeit durch Aufwandsreduzierung bei Material, Montage und Inbetriebnahme sowie durch die Reduzierung der Betriebs-Ausfallrate durch Verringerung der Anzahl der Verbindungselemente.

Die beim Datenaustausch auf den Busleitungen entstehenden Spannungshübe der alternierenden Impulsfolge des sin²-förmigen Spannungssignals müssen bei der Signalausgabe des angeschlossenen AS-i Transmitters fehlerfrei verarbeitet werden.

Dies führte bei den beim Stand der Technik hierzu bekannten Lösungen zu erhöhtem Aufwand, insbesondere bei der Schaltungstechnik der Ein- und Ausgänge der Sensorschaltung.

So ist es hierbei notwendig, dass wegen der Potentialhübe bzw. Massekopplungen, die wischen dem AS-i IC, den Sensorbestandteilen sowie der weiteren Schaltungsteilen der jeweiligen AS-i Einheit auftreten, die Ein- und Ausgänge des IC z.B. über Optokoppler galvanisch getrennt werden müssen.

Diese galvanische Trennung ist deshalb erforderlich, weil es im Falle der üblichen Realisierung der gesteuerten Stromquelle des AS-i-Transmitters mit N-Kanal-MOS-FET Transistoren notwendig ist, das Bulk-Potential der N-Kanal-MOS-FET auf Masse-Potential der Slave-Elektronik gelegt wird. Dieses Masse-Potential der Slave-Elektronik entspricht dem Potential auf der Aktuator/Sensor/AS-i Modul-Verbindung.

Läge die o.g. galvanische Trennung nicht vor, würde durch die Bildung von einem parasitärem Halbleiter pn-Übergang zwischen dem p-Substrat und den n-Dotierungen von Source und Drain des Transistors des üblichen Transmitters ein nicht gewollter "Kurzschluss" auftreten, der das Potential am Anschluss dieses üblichen Transmitters an die AS-iN Busleitung auf die Größe einer Dioden-Fluss-Spannung von -0,3 Volt begrenzt und damit die Signale bei der Datenübertragung verzerrt.

Somit besteht als großer Nachteil beim Stand der Technik, dass ein erhöhter Aufwand mit hohen Kosten betrieben werden muss, um bei AS-i-Transmittern die Signalverzerrungen, die sonst für die Signalübertragung erheblich sind, nicht wirksam werden zu lassen.

Die Aufgabe der Erfindung besteht darin, einen AS-i-Transmitter zu realisieren, der die bei der Signalausgabe potentiell vorliegende Gefahr von Signalverzerrungen verhindert ohne einen hohen Aufwand in der Slave-Elektronik zu betreiben und damit die Kosten stark reduziert.

Die erfindungsgemäße Aufgabenstellung wird dadurch gelöst, dass ein Ausgangssignal einer als zu einem jeweiligen AS-i-Modul zugehörigen Transmitter-Steuerung für die Ansteuerung einer Transmitter-Anpassschaltung eines ebenfalls diesem AS-i- Modul zugehörigen AS-i Transmitters derart bereitgestellt wird, dass seine Signalpegel auf das anliegende Potential der Aktuator/Sensor/AS-i Modul-Verbindung des Aktuator/Sensors bezogen sind.

Hierbei dient die Aktuator/Sensor-Stromversorgung als Stromversorgung für die Transmitter-Anpassschaltung, den AS-i Receiver und die Transmitter-Steuerung des AS-i-Moduls.

Infolgedessen steuert die Transmitter-Anpassschaltung über ihr ansteuerndes elektrisches Ausgangssignal eine angeschlossene gesteuerte Transmitter-Stromquelle, die ebenfalls Bestandteil des AS-i-Transmitters ist, so an, dass in ihr ein Transmitterausgangsstrom geprägt wird, der unabhängig von den anliegenden Potentialen der an den Ausgängen des AS-i-Transmitters angeschlossenen AS-iP- und AS-iN-Busleitungen fließt.

Diese Lösung zielt drauf ab, das Fließen des Transmitterausgangsstromes unabhängig von der Potentialdifferenz zwischen AS-iN-Busleitung und Aktuator/Sensor/AS-i Modul-Verbindung zu gestalten.

Eine Variante der Lösung der erfindungsgemäßen Aufgabenstellung wird dadurch erreicht, dass ein den Transmitterausgangsstrom prägender Transistor der gesteuerten Transmitter-Stromquelle als P-Kanal Transistor ausgeführt wird.

Eine spezielle Lösung der erfindungsgemäßen Aufgabenstellung liegt dadurch vor, dass der den Transmitterausgangsstrom prägende Transistor der gesteuerten Transmitter-Stromquelle zusammen mit einem in einer Erweiterungsschaltung bereitgestellten ersten Stromspiegeltransistor einen Stromspiegel bildet.

Hierbei wird der den Transmitterausgangsstrom prägende Transistor der gesteuerten Transmitter-Stromquelle durch einen zweiten Stromspiegeltransistor repräsentiert, der diesen Transmitterausgangsstrom nunmehr als vom ersten Stromspiegeltransistor gespiegelten Referenzstrom prägt.

Weiterhin werden die Bulkpotentiale des ersten und zweiten Stromspiegeltransistors gemeinsam auf das höchste Potential, welches die AS-iP-Busleitung führt, gelegt.

Der Referenzstrom von dem ebenfalls in der Erweiterungsschaltung enthaltenen Steuer-Transistor wird durch die Ansteuerung des Ausgangssignals der Transmitter-Anpassschaltung an seinem Gate über seiner Source-Drain Strecke geprägt, wobei der Steuer-Transistor mit seinem Source-Anschluss an die Aktuator/Sensor/AS-i Modul-Verbindung und sein Drain-Anschluss mit der Source-Drain Strecke des ersten Stromspiegeltransistors geschaltet ist.

Eine Variante der speziellen Lösung der erfindungsgemäßen Aufgabenstellung liegt dadurch vor, dass der AS-i-Receiver, die Digitalsteuerung mit der enthaltenen Transmitter-Steuerung und der AS-i Transmitter mit seiner enthaltenen Transmitter-Anpassschaltung, welche durch die Transmitter-Steuerung angesteuert wird, als Bestandteile des jeweiligen AS-i-Moduls in einem AS-i IC in P-Substrat CMOS Technologie realisiert wird.

Hierbei wird der dem AS-i Transmitter zugehörige Stromspiegel mit seinem ersten und zweiten Stromspiegeltransistor als in einem NWell eingebettete P-Kanal MOS-FETs ausgeführt.

Eine weitere Variante der speziellen Lösung der erfindungsgemäßen Aufgabenstellung liegt dadurch vor, dass der AS-i-Transmitter in einem AS-i IC in BI-CMOS-Technologie realisiert wird.

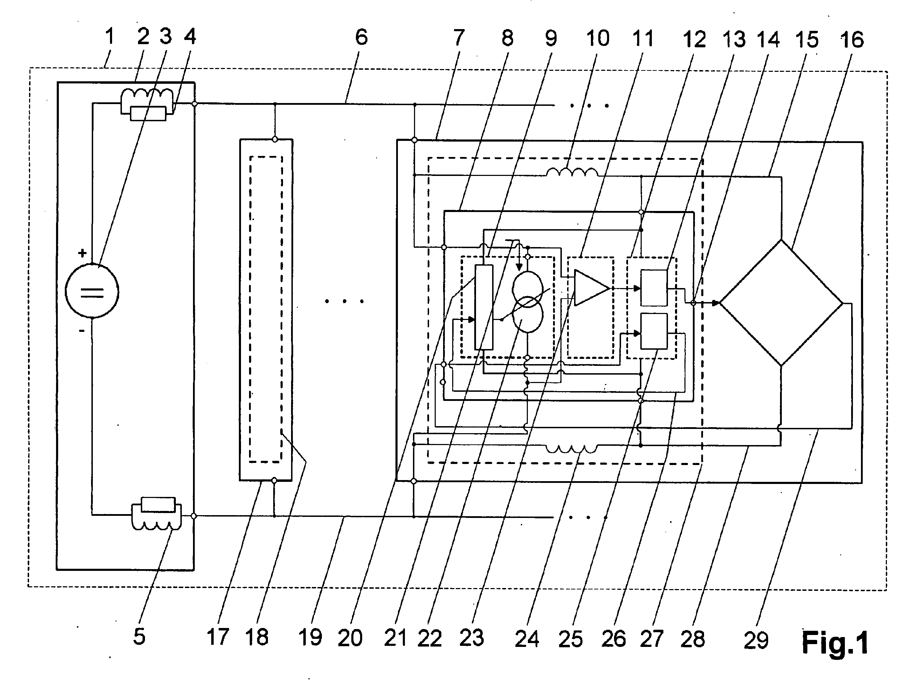

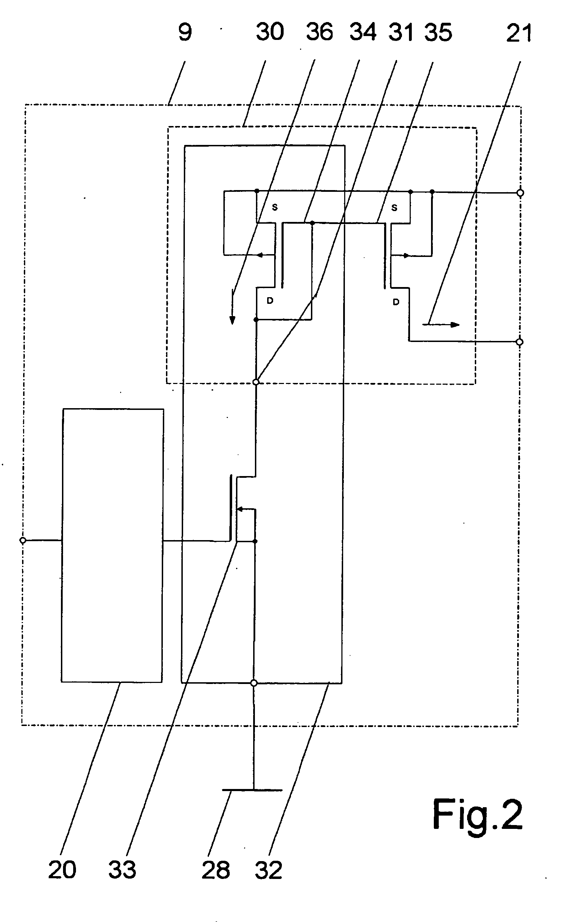

Die Erfindung soll an einem Ausführungsbeispiel in Verbindung mit Fig. 1 und Fig. 2 erläutert werden.

Während Fig. 1 ein Gesamtschaltbild eines AS-i Bussystems 1 zeigt, ist in Fig. 2 der erfindungsgemäße AS-i Transmitter 9 dargestellt.

In Fig. 1 ist ersichtlich, dass zum AS-i-Bussystem 1 das AS-i-Netzteil 2, zumindest die AS-i-Master Einheit 17 und eine AS-i-Slave Einheit 7 zugehörig sind, die über die AS-iP- bzw. AS-iN Busleitungen 6;19 verbunden sind.

Der Bus-Gleichspannungsqelle 3 des AS-i Netzteils 2 sind an ihrem Plus- bzw. Minus-Pol die ebenfalls im AS-i Netzteil 2 enthaltenen ersten und zweiten Modulationsglieder 3;4 mit ihrem jeweils ersten Anschluss in Reihe geschaltet.

Mit den jeweilig zweiten Anschlüsse der Modulationsglieder, die gleichzeitig die Ausgänge des AS-i Netzteils 2 darstellen, sind die AS-iP- bzw. AS-iN Busleitungen 6;19 verbunden.

Bei einer Masterantwort der jeweilig aufgerufenen AS-i Einheit wird vom zugehörigen AS-i Transmitter 9 durch den hierbei ausgegebenen Transmitterausgangsstrom 21 mittels der ersten und zweiten Modulationsglieder 4;5 eine alternierende Impulsfolge von sin²-förmigen Spannungssignalen erzeugt.

Diese Spannungssignale sind auf die Ausgangsspannung der Bus-Gleichspannungsquelle 3 moduliert.

Diese aufgerufene AS-i Einheit, die durch die AS-i-Slave Einheit 7 repräsentiert ist, besteht aus dem AS-i Slave-Modul 27 und dem Aktuator/Sensor 16. Zentraler Bestandteil des AS-i Slave-Moduls 27 ist der AS-i-IC 8, der die Bestandteile AS-i Transmitter 9, den AS-i Receiver 11 und die Digitalsteuerung 12 enthält. Über seine Anschlüsse ist der AS-i-IC 8 direkt mit den Busleitungen verbunden.

Die gemeinsame Stromversorgung des Aktuator/Sensors 16 und des AS-i-IC 8 wird einerseits betriebsspannungsmäßig am Betriebsspannungsanschluss des AS-i-IC 8 und an dem Betriebsspannungsanschluss des Aktuator/Sensors 16 mit der Aktuator/Sensor-Stromversorgung 15 und anderseits massemäßig am dem Masseanschluss des AS-i-IC 8 und an dem Masseanschluss des Aktuator/Sensors 16 mit der Aktuator/Sensor/AS-i Modul-Verbindung 28 vorgenommen.

Aktuator/Sensor-Stromversorgung 15 und Aktuator/Sensor/AS-i Modul-Verbindung 28 werden durch Anschlüsse an die AS-iP- und AS-iN-Busleitungen 6; 19, bei denen jeweils die erste und zweite Koppelinduktivität 10; 24 zwischengeschaltet werden, realisiert. Die erste und zweite Koppelinduktivität 10; 24 dient dazu, die auf die Ausgangsspannung der Bus-Gleichspannungsquelle modulierten Spannungssignale zu filtern.

Mit einem zusätzlichen Anschluss ist der AS-i-IC 8 mit dem Aktuator/Sensor 16 geschaltet. Über diesen Anschluss wird das Aktuatorsignal 14 an den Aktuator/Sensor 16 ausgegebenen.

Dieses Aktuatorsignal 14 repräsentiert das bei einem Masteraufruf vom Receiver 11 zurückgewonnene manchestercodierte Signal, welches nachfolgend von der Digitalsteuerung 12 dekodiert und von der in ihr enthaltenen Aktuator-Steuerung 13 angepasst ausgegeben wird.

Das vom Aktuator/Sensor 16 bereitgestellte Sensorsignal 29 wird über einen weiteren Anschluss des AS-i-IC 8 ebenfalls der Digitalsteuerung 12 für eine Weiterverarbeitung zur Verfügung gestellt, wobei das verarbeitete Signal bei einer Masterantwort von der ebenfalls in ihr enthaltenen Transmitter-Steuerung 25 als AS-i Slave-Sendesignal 26 an die im Transmitter 9 enthaltene Transmitter-Anpasschaltung 20 ausgegeben wird.

In seinem Signalpegel ist das AS-i Slave-Sendesignal 26 auf das bezüglich des am AS-i-IC 8 anliegenden Potentials der Aktuator/Sensor/AS-i Modul-Verbindung 28 des Aktuator/Sensors 16 angepasst.

In der Transmitter-Anpasschaltung 20 wird das Sensorsignal 29, wie beim Stand der Technik üblich, in seinem zeitlichen Verlauf geformt.

Erfindungsgemäß steuert die Transmitter-Anpasschaltung 20 über ihr ansteuerndes elektrisches Ausgangssignal eine angeschlossene gesteuerte Transmitter-Stromquelle 22, die ebenfalls Bestandteil des AS-i-Transmitters 9 ist, so an, dass in ihr ein Transmitterausgangsstrom 21 geprägt wird, der unabhängig von den anliegenden Potentialen der an den Ausgängen des AS-i-Transmitters 9 angeschlossenen AS-iP- und AS-iN-Busleitungen 6; 19 fließt.

Wie in Fig. 2 ersichtlich, ist der mit einer Erweiterungsschaltung 32 versehene erfindungsgemäße AS-i Transmitter 9 dargestellt.

Bei diesem AS-i Transmitter 9 bildet der den Transmitterausgangsstrom 21 prägende Transistor der gesteuerten Transmitter-Stromquelle 22 zusammen mit der in der Erweiterungsschaltung 32 bereitgestellten ersten Stromspiegeltransistor 34 einen Stromspiegel 30.

Hierbei wird der den Transmitterausgangsstrom 21 prägende Transistor der gesteuerten Transmitter-Stromquelle 22 durch den zweiten Stromspiegeltransistor 35 repräsentiert, der diesen Transmitterausgangsstrom 21 nunmehr als vom ersten Stromspiegeltransistor 34 gespiegelten Referenzstrom 36 prägt.

Der Referenzstrom 36 wird von dem ebenfalls in der Erweiterungsschaltung enthaltenen Steuer-Transistor 33 durch die Ansteuerung des Ausgangssignals der Transmitter-Anpassschaltung 20 an seinem Gate über seine Source-Drain Strecke geprägt, wobei der Steuer-Transistor 33 mit seinem Source-Anschluss an die Aktuator/Sensor/AS-i Modul-Verbindung 28 und sein Drain-Anschluss mit der Source-Drain Strecke des ersten Stromspiegeltransistors 34 geschaltet ist.

Einerseits gewährleistet der Strompfad Steuer-Transistor 33/erster Stromspiegeltransistor 34, dass die von der Transmitter-Anpassschaltung 20 bereitgestellten Ansteuersignale im Steuer-Transistor 33 einen solchen Referenzstrom 36 prägt, der sich unabhängig von dem Potential auf der Aktuator/Sensor/AS-i Modul-Verbindung 28, an die der Steuer-Transistor 33 angeschlossen ist, und dem Potential auf der AS-iP-Busleitung 6, an die der erster Stromspiegeltransistor 34 angeschlossen ist, verhält.

Anderseits wird durch die Spiegelung des geprägten Referenzstrom 36 in dem aus erstem und zweiten Stromspiegeltransistor 34; 35 bestehenden Stromspiegel 30 gewährleistet, dass der in Betrag und Änderungen bezüglich Referenzstrom 36 gleichlaufende Transmitterausgangsstrom 21 bereitgestellt wird.

Weiterhin werden die Bulkpotentiale des ersten und zweiten Stromspiegeltransistors 34; 35 gemeinsam auf das höchste Potential, welches die AS-iP-Busleitung 6 führt, gelegt

Dadurch, dass die Bulkpotentiale des ersten und zweiten Stromspiegeltransistors 34; 35 gemeinsam auf das höchste Potential, welches die AS-iP-Busleitung 6 führt, gelegt werden, wird eine Signalverzerrung auch dann bei Potentialen auf der AS-iN Busleitung 19 von unter -0,3 V vermieden, wenn ein üblicher Einsatz von Optoelektronik nicht vorgenommen wird.

### Bezugszeichenliste

- 1: AS-i-Bussystem
- 2: AS-i Netzteil
- 3: Bus-Gleichspannungsquelle
- 4: erstes Modulationsglied
- 5: zweites Modulationsglied
- 6: AS-iP-Busleitung
- 7: AS-i-Slave Einheit
- 8: AS-i-IC
- 9: AS-i Transmitter
- 10: erste Slave-Koppelinduktivität
- 11: AS-i Receiver
- 12: Digital-Steuerung
- 13: Aktuator-Steuerung
- 14: Aktuatorsignal
- 15: Aktuator/Sensor-Stromversorgung (gleichzeitig Stromversorgung des AS-i-IC/Modul)
- 16: Aktuator/Sensor
- 17: AS-i-Master Einheit
- 18: AS-i Master-Modul
- 19: AS-iN-Busleitung
- 20: Transmitter-Anpasschaltung
- 21: Transmitterausgangsstrom
- 22: gesteuerte Transmitter-Stromquelle
- 23: Komparator
- 24: zweite Slave-Koppelinduktivität
- 25: Transmitter-Steuerung
- 26: AS-i Slave-Sendesignal
- 27: AS-i Slave-Modul
- 28: Aktuator/Sensor/AS-i-Modul-Verbindung
- 29: Sensorsignal
- 30: Stromspiegel
- 31: Stromspiegeleingang
- 32: Erweiterungsschaltung
- 33: Steuer-Transistor
- 34: erster Stromspiegeltransistor
- 35: zweiter Stromspiegeltransistor
- 36: Referenzstrom

## Patentansprüche

1. Verfahren zur Signalausgabe von AS-i-Transmittern, die in AS-i-Einheiten (Actuator-Sensor-Interface-Einheiten) eines AS-i Bussystems enthalten sind, wobei zum AS-i Bussystem zumindest ein AS-i-Master-Modul und ein AS-i-Slave-Modul gehören, **dadurch gekennzeichnet, dass** ein Ausgangssignal einer als zu einem jeweiligen AS-i-Modul zugehörigen Transmitter-Steuerung (25) für die Ansteuerung einer Transmitter-Anpassschaltung (20) eines ebenfalls diesem AS-i- Modul zugehörigen AS-i Transmitters (9) derart bereitgestellt wird, dass seine Signalpegel auf das anliegende Potential der Aktuator/Sensor/AS-i-Modul-Verbindung (28) des Aktuator/Sensors (16) bezogen sind, wobei die Aktuator/Sensor-Stromversorgung (15) als Stromersorgung für die Transmitter-Anpassschaltung (20), den Receiver (11) und die Transmitter-Steuerung (25) des AS-i-Moduls dient,
dass infolgedessen die Transmitter-Anpassschaltung (20) über sein ansteuerndes elektrisches Ausgangssignal eine angeschlossene gesteuerte Transmitter-Stromquelle (22), die ebenfalls Bestandteil des AS-i-Transmitters (9) ist, so ansteuert, dass in ihr ein Transmitterausgangsstrom (21) geprägt wird, der unabhängig von den anliegenden Potentialen der an den Ausgängen des AS-i-Transmitters (9) angeschlossenen AS-iP- und AS-iN-Busleitungen (6),(19) fließt.

2. Verfahren nach Anspruch 1, **dadurch gekennzeichnet, dass** ein den Transmitterausgangsstrom (21) prägender Transistor der gesteuerten Transmitter-Stromquelle (22) als P-Kanal Transistor ausgeführt wird.

3. Verfahren nach Ansprüchen 1 und 2, **dadurch gekennzeichnet, dass** der den Transmitterausgangsstrom (21) prägende Transistor der gesteuerten Transmitter-Stromquelle (22) zusammen mit einem in einer Erweiterungsschaltung (32) bereitgestellten ersten Stromspiegeltransistor (34) einen Stromspiegel (30) bildet,
dass der den Transmitterausgangsstrom (21) prägende Transistor der gesteuerten Transmitter-Stromquelle (22) hierbei durch einen zweiten Stromspiegeltransistor (35) repräsentiert wird, der diesen Transmitterausgangsstrom (21) nunmehr als vom ersten Stromspiegeltransistor (34) gespiegelten Referenzstrom (36) prägt,
dass die Bulkpotentiale des ersten und zweiten Stromspiegeltransistors (34),(35) gemeinsam auf das höchste Potential, welches die AS-iP-Busleitung (6) führt, gelegt werden,
dass der Referenzstrom (36) von dem ebenfalls in der Erweiterungsschaltung (32) enthaltenen Steuer-Transistor (33) durch die Ansteuerung des Ausgangssignals der Transmitter-Anpassschaltung (20) an seinem Gate über seiner Source-Drain Strecke geprägt wird, wobei der Steuer-Transistor (33) mit seinem Source-Anschluss an die Aktuator/Sensor/AS-i Modul-Verbindung (28) und sein Drain-Anschluss mit der Source-Drain Strecke des ersten Stromspiegeltransistors (34) geschaltet ist.

4. Verfahren nach Ansprüchen 1 bis 3, **dadurch gekennzeichnet, dass** der AS-i- Receiver (11), die Digitalsteuerung (12) mit der enthaltenen Transmitter-Steuerung (25) und der ASi Transmitter (9) mit seiner enthaltenen Transmitter-Anpassschaltung (20), welche durch die Transmitter-Steuerung (25) angesteuert wird, als Bestandteile des jeweiligen AS-i-Moduls in einem AS-i IC (8) in P-Substrat CMOS Technologie realisiert wird, wobei der dem AS-i Transmitter (9) zugehörige Stromspiegel (30) mit seinem ersten und zweiten Stromspiegeltransistor (34),(35) als in einem NWell eingebettete P-Kanal MOS-FETs ausgeführt werden.

5. Verfahren nach Ansprüchen 1 bis 3, **dadurch gekennzeichnet, dass** der AS-i-Transmitter (9) in einem AS-i IC (8) in BI-CMOS-Technologie realisiert wird.

## Claims

1. Method of outputting signals from AS-i transmitters which are included in AS-i units (actuator/sensor interface units) of an AS-i bus system, there belonging to the AS-i bus system at least one AS-i master module and one AS-i slave module, **characterised in that** an output signal from a transmitter controller (25), as belonging to a given AS-i module, for driving a transmitter adjusting circuit (20) of an AS-i transmitter (9) which also belongs to this AS-i module is produced in such a way that its signal level is referred to the potential present on the actuator/sensor-AS-i module connection (28) of the actuator/sensor (16), the actuator/sensor power supply (15) acting as a power supply for the transmitter adjusting circuit (20), the receiver (11) and the transmitter controller (25) of the AS-i module, **in that** consequently the transmitter adjusting circuit (20), by means of its electrical, driving, output signal, drives a connected, controlled transmitter current source (22), which is also part of the AS-i transmitter (9), in such a way that there is generated in the said transmitter current source (22) a transmitter output current (21) which flows regardless of the potentials present on the AS-i P and AS-i N bus lines (6), (19) connected to the outputs of the AS-i transmitter (9).

2. Method according to Claim 1, **characterised in that** a transistor which belongs to the controlled transmitter current source (22) and which generates the transmitter output current (21) takes the form of a p-channel transistor.

3. Method according to Claims 1 and 2, **characterised in that**, together with a first current mirror transistor (34) provided in an extension circuit (32), the transistor which belongs to the controlled transmitter current source (22) and which generates the transmitter output current (21) forms a current mirror (30), **in that** the transistor which belongs to the controlled transmitter current source (22) and which generates the transmitter output current (21) is represented in this case by a second current mirror transistor (35), which now generates the said transmitter output current (21) as a reference current (36) mirrored by the first current mirror transistor (34), **in that** the bulk potentials of the first and second current mirror transistors (34, (35) are applied together to the highest potential carried by the AS-i P line (6), and **in that** the reference current (36) is generated by the control transistor (33) which is also included in the extension circuit (32), as a result of the drive applied by the output signal from the transmitter adjusting circuit (20), at its gate via its source-drain path, the control transistor (33) being connected to the actuator/sensor-AS-i module connection (28) by its source terminal and its drain terminal being connected to the source-drain path of the first current mirror transistor (34).

4. Method according to Claims 1 to 3, **characterised in that** the AS-i receiver (11), the digital controller (12) and the transmitter controller (25) included therein, and the AS-i transmitter (9) and the transmitter adjusting circuit (20) included therein which is driven by the transmitter controller (25), are produced as components of the given AS-i module in an AS-i IC (8) employing p-substrate CMOS technology, the current mirror (30) belonging to the AS-i transmitter (9), as formed by its first and second current mirror transistors (34), (35), being produced in the form of MOS-FETs embedded in an nwell.

5. Method according to Claims 1 to 3, **characterised in that** the AS-i transmitter (9) is produced in an AS-i IC (8) employing BI-CMOS technology.

## Revendications

1. Procédé pour la délivrance de signaux à partir de transmetteurs AS-i, qui sont contenus dans des unités AS-i (Unités Actionneur-Détecteur-Interface) d'un système de bus AS-i, avec au moins un module maître AS-i et un module esclave AS-i appartenant au système de bus AS-i,
**caractérisé en ce qu'**
on produit un signal de sortie d'une commande de transmetteur (25) appartenant à un module AS-i respectif pour la commande d'un circuit d'adaptation de transmetteur (20) d'un transmetteur AS-i (9) appartenant également à ce module AS-i, de telle façon que ses niveaux de signal soient rapportés au potentiel appliqué de la liaison actionneur/détecteur/module AS-i (28) de l'actionneur/détecteur (16), l'alimentation électrique de l'actionneur/détecteur (15) servant d'alimentation électrique pour le circuit d'adaptation de transmetteur (20), le récepteur (11) et la commande de transmetteur (25) du module AS-i, par conséquent le circuit d'adaptation de transmetteur (20) commande, par son signal électrique de sortie de commande, une source de courant de transmetteur (22) commandée raccordée, qui fait également partie de transmetteur AS-i (9), de façon à imposer dans celle-ci, un courant de sortie de transmetteur (21) qui circule indépendamment des potentiels appliqués des lignes de bus (6, 19) AS-iP et AS-iN raccordées aux sorties du transmetteur AS-i (9).

2. Procédé selon la revendication 1,
**caractérisé en ce qu'**
un transistor de la source de courant de transmetteur commandée (22) imposant le courant de sortie de transmetteur (21) est réalisé sous la forme d'un transistor à canal P.

3. Procédé selon les revendications 1 et 2,
**caractérisé en ce que**
le transistor de la source de courant de transmetteur commandée (22) imposant le courant de sortie de transmetteur (21) forme un miroir de courant (30) avec un premier transistor de miroir de courant (34) réalisé dans un circuit d'expansion (32), le transistor de la source de courant de transmetteur commandée (22) imposant le courant de sortie de transmetteur (21) est en l'occurrence représenté par un deuxième transistor de miroir de courant (35) qui impose alors ce courant de sortie de transmetteur (21) comme courant de référence (36) reflété par le premier transistor de miroir de courant (34), les potentiels bulk du premier et du deuxième transistors de miroir de courant (34), (35) sont appliqués en commun au potentiel le plus élevé que la ligne de bus AS-iP (6) conduit, le courant de référence (36) est imposé par le transistor de commande (33) également contenu dans le circuit d'expansion (32) par la commande du signal de sortie du circuit d'adaptation de transmetteur (20) à sa grille via sa zone source-drain, le transistor de commande (33) étant raccordé avec son raccord source à la liaison actionneur/détecteur/module AS-i (28) et son raccord drain est raccordé à la zone source-drain du premier transistor de miroir de courant (34).

4. Procédé selon les revendications 1 à 3,
**caractérisé en ce que**
le récepteur AS-i (11), la commande numérique (12) avec la commande de transmetteur contenue (25) et le transmetteur AS-i (9) avec son circuit d'adaptation de transmetteur contenu (20), qui est commandé par la commande de transmetteur (25), sont réalisés sous forme de composants du module AS-i respectif dans un CI AS-i (8) dans la technologie CMOS à substrat P, et le miroir de courant (30) appartenant au transmetteur AS-i (9), avec son premier et son deuxième transistor de miroir de courant (34), (35), est réalisé sous forme de MOS-FET à canal P enrobés dans un puits N.

5. Procédé selon les revendications 1 à 3,
**caractérisé en ce que**
le transmetteur AS-i (9) est réalisé dans un CI AS-i (8) dans la technologie BI-CMOS.
